# EUROPEAN PATENT APPLICATION

(11) **EP 4 848 378 A1**
(43) Date of publication of application: **02.12.2026**
(21) Application number: 26170867.1
(22) Date of filing: 07.04.2026
(51) Int. Cl.: H01M 4/62, H01M 4/04, H01M 4/36, H01M 4/38, H01M 4/48

(54) **ANODE MATERIAL AND SECONDARY BATTERY**

(30) Priority: 29.05.2025 CN 202510716697
(71) Applicant: BTR New Material Group Co., Ltd., Shenzhen, Guangdong 518106 (CN)
(72) Inventor: HE, Peng, Shenzhen, 518106 (CN); XIAO, Chengmao, Shenzhen, 518106 (CN); REN, Jianguo, Shenzhen, 518106 (CN); HUANG, Youyuan, Shenzhen, 518106 (CN); HE, Xueqin, Shenzhen, 518106 (CN)
(74) Representative: Müller Schupfner & Partner Patent- und Rechtsanwaltspartnerschaft mbB (Muc)

(57) **Abstract**

The present disclosure discloses an anode material and a secondary battery, and relates to a technical field of secondary batteries. The anode material includes a carbon matrix and a silicon-based active material loaded on the carbon matrix; an average atomic percentage of carbon element in a range from a surface of the anode material to a depth of 20 nm is C₀₋₂₀, and an average atomic percentage of carbon element in a range from a depth of 160 nm to 200 nm of the anode material is C₁₆₀-₂₀₀, where 0.8≤C₁₆₀₋₂₀₀/C₀₋₂₀<1. By controlling the atomic percentage content of carbon element at different depths of the anode material, on one hand, the present disclosure can improve the capacity of the anode material, and on the other hand, can improve the stability of the anode material, so that the anode material has good electrochemical performance.

## Description

### TECHNICAL FIELD

The present disclosure relates to the technical field of secondary batteries, in particular to an anode material and a secondary battery.

### BACKGROUND

In recent years, with development of market, lithium-ion batteries are not only widely applied to mobile devices such as smart phones and portable computers, but also applied to fields such as electric vehicles and electric tools. It is a main trend to develop lithium-ion batteries with high energy density. An anode material is a core of batteries, which determine working efficiency of the batteries. At present, a commercial anode material is graphite, its capacity is already close to a theoretical upper limit, and the extent of further improvement is limited. Therefore, it is urgent to develop a new generation of anode material with high energy density.

A silicon anode is generally considered as a next-generation anode material of the battery, which has advantages such as high capacity, rich sources, and relative safety. However, the silicon anode has a severe volume expansion effect in a cycle process, resulting in pulverization and fragmentation of the material, and rapid decrease of the capacity of the material during the cycle process. To address this problem, multiple solutions are currently available, including structural modification of the silicon anode by technical means such as nanosizing and porosification, modification through composite coating, and modification to electrolytes, binders and so on. However, the existing solution has limited effectiveness in improving the performance of the silicon anode material, and a long cycle performance of the silicon anode material further has a large improvement space.

### SUMMARY

A main object of the present disclosure is to provide an anode material and a secondary battery to solve a problem of insufficient cycle performance of the silicon anode material in the related art.

In order to achieve the above object, a first aspect of the present disclosure provides an anode material. The anode material includes a carbon matrix and a silicon-based active material loaded on the carbon matrix. An average atomic percentage of carbon element in a range from a surface (0 nm) of the anode material to a depth of 20 nm is C₀₋₂₀, and an average atomic percentage of carbon element in a range from a depth of 160 nm to 200 nm of the anode material is C₁₆₀₋₂₀₀, a ratio of C₁₆₀₋₂₀₀ to C₀₋₂₀ satisfies: 0.8≤C₁₆₀₋₂₀₀/C₀₋₂₀<1.

A second aspect of the present disclosure provides a secondary battery. The secondary battery includes a case, an electrode assembly, and an electrolyte. The electrode assembly includes a cathode plate, an anode plate, and a separator. The separator is disposed between the cathode plate and the anode plate. The anode plate includes an anode current collector and an anode active material layer disposed on at least one surface of the anode current collector. The anode active material layer includes the anode material in the first aspect of the present disclosure.

By applying the technical solutions of the present disclosure, the structure of the anode material is controlled, and the silicon-based active material is loaded on the carbon matrix, so that on one hand, the capacity of the anode material is improved, on the other hand, the stability of the anode material can be achieved, and the expansion rate in the cycle process is reduced. In addition, by adjusting the distribution condition of the carbon element in the depth direction of the anode material, the carbon element are reasonably distributed in the depth direction of the anode material, and the conductivity, the capacity and the cycle stability of the anode material can be improved. If the ratio C₁₆₀₋₂₀₀/C₀₋₂₀<0.8, the surface of the anode material has more free carbon, and the capacity and the charge and discharge efficiency of the battery prepared from the anode material can be affected. If the ratio C₁₆₀₋₂₀₀/C₀₋₂₀ ≥1, the carbon content on the surface of the anode material is less, the reaction activity between the anode material and the electrolyte is high, and the cycle performance of the battery prepared from the anode material is affected.

### DESCRIPTION OF EMBODIMENTS

In order to make objectives, technical solutions, and advantages of the embodiments of the present disclosure clearer, the technical solutions of the embodiments of the present disclosure will be described clearly and completely below. If specific conditions are not indicated in the embodiments, it shall be carried out in accordance with the conventional conditions or the conditions recommended by the manufacturer. The reagents or instruments used are conventional products commercially available from manufacturers.

A typical embodiment of the present disclosure provides a secondary battery. The secondary battery includes a case, an electrode assembly and an electrolyte. The electrode assembly and electrolyte are both located within the case.

The case may be a packaging bag obtained by packaging with a packaging film (such as an aluminum-plastic film), for example, the secondary battery is a pouch cell. In some other embodiments, the secondary battery may also be a steel-case battery, an aluminum-case battery and the like.

The electrode assembly includes a cathode plate, an anode plate and a separator. The separator is disposed between the cathode plate and the anode plate. The electrode assembly may be a laminated structure, which is formed by alternately sequentially laminating the cathode plate, the separator and the anode plate. In other embodiments, the electrode assembly may also be a rolling structure, which is formed by sequentially laminating the cathode plate, the separator and the anode plate and then rolling.

### Cathode Plate

The cathode plate includes a cathode current collector and a cathode active layer disposed on at least one surface of the cathode current collector. The cathode current collector may be an aluminum foil or a nickel foil and the like, or may be any composite current collector disclosed in the related art, for example, but not limited to, a current collector formed by combining the above conductive foil and a polymer matrix. The cathode active layer includes a cathode active material. The cathode active material includes a compound capable of reversible intercalation and deintercalation of lithium ions (that is, a lithiated intercalation compound). In some embodiments, the cathode active material may include a lithium transition metal composite oxide. The lithium transition metal composite oxide contains lithium and at least one element selected from cobalt, manganese and nickel. In some embodiments, the cathode active material may include, but is not limited to, at least one of lithium cobalt oxide (LiCoO₂), lithium nickel manganese cobalt ternary material (NCM), lithium manganate (LiMn₂O₄), lithium nickel manganate (LiNi_{0.5}Mn_{1.5}O₄), and lithium iron phosphate (LiFePO₄).

The cathode active layer further includes a binder for bonding particles of the cathode active material so as to form a film layer. In addition, the binding force between the cathode active layer and the cathode current collector can be improved. In some embodiments, the binder may include, but is not limited to, at least one of polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon and the like.

The cathode active layer may further include a conductive material. The conductive material includes, but is not limited to, a carbon-based material, a metal-based material, a conductive polymer, or any combination thereof. In some embodiments, the carbon-based material may include, but is not limited to, natural graphite, artificial graphite, carbon black, acetylene black, Ketjen black, carbon fiber, or any combination thereof. In some embodiments, the metal-based material may include, but is not limited to, metal powder or metal fibers, such as copper, nickel, aluminum, or silver. In some embodiments, the conductive polymer may be a polyphenylene derivative.

### Anode Plate

The anode plate includes an anode current collector and an anode active material layer disposed on at least one surface of the anode current collector. The anode current collector may be at least one of copper foil, nickel foil, stainless steel foil, titanium foil, carbon-based current collector and the like, and may also be any composite current collector disclosed in the related art, for example, but not limited to a current collector formed by combining the foregoing conductive foil and a polymer matrix. The anode active material layer includes an anode material, a binder, and a conductive material.

In a typical embodiment of the present disclosure, the anode material includes a carbon matrix and a silicon-based active material loaded on the carbon matrix. An average atomic percentage of carbon element in a range from a surface (0 nm) of the anode material to a depth of 20 nm is C₀₋₂₀, and an average atomic percentage of carbon element in a range from a depth of 160 nm to 200 nm of the anode material is C₁₆₀₋₂₀₀, a ratio of C₁₆₀₋₂₀₀ to C₀₋₂₀ satisfies: 0.8≤C₁₆₀₋₂₀₀/C₀₋₂₀<1. Specifically, the ratio C₁₆₀₋₂₀₀/C₀₋₂₀ may be 0.8, 0.85, 0.9, 0.95, 0.99 or any value within a range of any two above values, which is not particularly limited herein.

In the present disclosure, by applying the technical solutions of the present disclosure, the structure of the anode material is controlled, and the silicon-based active material is loaded on the carbon matrix, so that on one hand, the capacity of the anode material is improved, on the other hand, the stability of the anode material can be achieved, and the expansion rate in the cycle process is reduced. In addition, by adjusting the distribution condition of the carbon element in the depth direction of the anode material, the carbon element are reasonably distributed in the depth direction of the anode material, and the conductivity, the capacity and the cycle stability of the anode material can be improved. If the ratio C_{160 -200}/C₀₋₂₀<0.8, the surface of the anode material has more free carbon, and the capacity and the charge and discharge efficiency of the battery prepared from the anode material can be affected. If the ratio C₁₆₀₋₂₀₀/C₀₋₂₀ ≥1, the carbon content on the surface of the anode material is less, the reaction activity between the anode material and the electrolyte is high, and the cycle performance of the battery prepared from the anode material is affected.

In some embodiments, C₀₋₂₀ is in a range from 90% to 98%, specifically, C₀₋₂₀ may be 90%, 91%, 92%, 93%, 94%, 95%, 96%, 97%, 98% or any value within a range of any two above values, which is not particularly limited herein. In an embodiment, C₀₋₂₀ is in a range from 90% to 98%, more preferred from 92% to 97%, still more preferred from 93% to 96%, still more preferred from 94% from 96%, most preferred from 95% to 96%.

Controlling C₀₋₂₀ within the above range can improve the conductivity of the anode material, and reduce the probability of direct contact between the silicon-based active material and the electrolyte, thereby improving the cycle stability of the battery prepared from the anode material.

In some embodiments, C₁₆₀₋₂₀₀ is in a range from 79% to 89%, specifically, C₁₆₀₋₂₀₀ may be 79%, 80%, 81%, 82%, 83%, 84%, 85%, 86%, 87%, 88%, 89% or any value within a range of any two above values, which is not particularly limited herein.

Controlling C_{160 -200} within the above range can buffer the volume expansion and contraction of the silicon-based active material during charging and discharging, thereby reducing the pulverization of the material and improving the structural stability of the anode material. In addition, it also can promote the transmission of electrons in the anode material and improve the rate performance of the battery.

In some embodiments, an average atomic percentage of silicon element in a range from a surface of the anode material to a depth of 20 nm is Si₀₋₂₀, and an average atomic percentage of silicon element in a range from a depth of 160 nm to 200 nm of the anode material is Si_{160 -200}, a ratio of Si₁₆₀₋₂₀₀ to Si₀₋₂₀ satisfies: Si₁₆₀₋₂₀₀/Si₀₋₂₀≥6.9, specifically, the ratio Si₁₆₀₋₂₀₀/Si₀₋₂₀ may be 6.9, 7.1, 7.5, 8, 9, 10, 11, 12, 13, 15, 20, 25, 30 or any value within a range of any two above values, which is not particularly limited herein.

By regulating and controlling the atomic percentage content of silicon element in the depth direction of the anode material, on one hand, lithium ions can be rapidly intercalated into the anode material or deintercalated from the anode material, and enough lithium ion deintercalation sites are provided. On the other hand, by reducing the atomic percentage content of silicon element on the surface layer, the reaction activity between the anode material and the electrolyte can be relieved, the expansion rate of the anode material can be reduced, and the cycle performance of the anode material can be improved. Further, 6.9≤Si₁₆₀₋₂₀₀/Si₀₋₂₀≤12.9, and by controlling the upper limit of the ratio Si_{160 -200}/Si₀₋₂₀, the change of the content the silicon element in the depth direction of the anode material is relatively smooth, and the structural stability of the anode material can be improved.

In the present disclosure, an X-ray photoelectron spectroscopy test is carried out on an anode material by adopting Thermo Scientific K-Alpha (USA), the whole test process is carried out in a glove box filled with argon. Ta₂O₅ is used as a sputtering standard sample for calibrating a sputtering rate and a depth scale. A thermally oxidation Ta₂O₅ film with a uniform thickness of 300 nm is prepared on a single-crystal Ta substrate. The Ta₂O₅ film is sputtered off, and the intensity variation of the Ta₂O₅ characteristic peak and the elemental Ta characteristic peak in the Ta4f spectrum is monitored to determine a duration required for complete removal of the Ta₂O₅. Using the known thickness of Ta₂O₅, the sputtering rate is calculated as: sputtering rate = thickness / sputtering time. The sputtered depth is then determined based on the sputtering rate. Fine spectrum of three elements C, Si and O need to be tested at each time of spectrum collection, the sputtering depth of argon ions is set to be 20 nm each time, the test mode is spectrum collection and 20 nm etching, and circulation is carried out for a certain number of times. The above test is repeated in any twenty different regions of the anode material, and finally, the average atomic percentage of the three elements C, Si and O in the anode material in the depth range of 0nm to 20 nm and the depth range of 160 nm to 200 nm (in each depth range, a total atomic percentage content of the three elements C, Si and O is 100%) is obtained through statistics.

In some embodiments, Si₀₋₂₀ is in a range from 0.4% to 2%, specifically, Si₀₋₂₀ may be 0.4%, 0.5%, 0.8%, 1%, 1.2%, 1.5%, 1.8%, 2% or any value within a range of any two above values, which is not particularly limited herein. In an embodiment, Si₀₋₂₀ is in a range from 0.4% to 1.8%, more preferred from 0.5% to 1.5%, most preferred from 1% to 1.2%

Controlling Si₀₋₂₀ within the above range can reduce the volume change of the anode material during charging and discharging, and maintain the structural integrity of the anode material; in addition, it is also helpful to maintain the rapid intercalation and deintercalation of lithium ions inside the anode material, thereby improving the rate performance of the battery.

In some embodiments, Si_{160 -200} is in a range from 10% to 15%, specifically, Si₁₆₀₋₂₀₀ may be 10%, 11%, 12%, 13%, 14%, 15% or any value within a range of any two above values, which is not particularly limited herein. In an embodiment, Si_{160 -200} is in a range from 10% to 15%, more preferred from 10% to 14%, still more preferred from 11% to 13%, most preferred from 12% to 13%.

Controlling Si_{160 -200} in the above range can form enough lithium ion intercalation and deintercalation channels while maintaining structural stability of the anode material, thereby improving capacity of the anode material.

In some embodiments, the carbon matrix has pores, and at least part of the silicon-based active material is located in the pores of the carbon matrix.

By controlling the structure of the anode material, the volume change of the silicon-based active material in the charging and discharging process is effectively buffered, the expansion and contraction of the anode material are reduced, and the cycle performance of the anode material is improved.

Typically, but not exclusively, the carbon matrix includes at least one of artificial graphite, natural graphite, amorphous carbon, activated carbon, mesocarbon microbeads, carbon nanotubes, carbon nanofibers, porous carbon, graphene. These materials all have good electrical conductivity and structural stability and are suitable for use in the carbon matrix.

Typically, but not exclusively, the silicon-based active material includes at least one of an elemental silicon, a silicon oxide, and a silicon alloy.

In some embodiments, the silicon-based active material includes an elemental silicon. The elemental silicon includes at least one of crystalline silicon, amorphous silicon, and a composite of crystalline silicon and amorphous silicon. The theoretical specific capacity of the crystalline silicon is high, which can improve the energy density of the battery; although the theoretical specific capacity of the amorphous silicon is low, the amorphous structure can inhibit the stress caused by the volume expansion in the lithiation process, and prolong the service life. The composite of the crystalline silicon and the amorphous silicon can combine the advantages of the crystalline silicon and the amorphous silicon, so that the anode material achieves the balance of structural stability and high capacity. Preferably, the elemental silicon includes amorphous silicon, and the amorphous silicon expands isotropically in the lithium intercalation process, so that the collapse of the pore structure can be reduced, the specific capacity is inhibited from rapidly attenuating, and the lithium intercalation cycle performance of the anode material is improved.

In some embodiments, the silicon-based active material includes a silicon alloy. The silicon alloy may be at least one of a silicon-lithium alloy, a silicon-magnesium alloy and the like, which is not limited herein. The silicon alloy can reduce the volume expansion rate, improve the cycle stability and service life of the anode material, and can improve the electronic conductivity and improve the lithium ion transmission rate.

In some embodiments, the silicon-based active material includes silicon oxide, and a general formula of the silicon oxide is SiOₓ, where 0.5≤x<2. Specifically, SiOₓ may be specifically SiO_{0.5}, SiO_{0.7}, SiO_{0.9}, SiO, SiO_{1.2}, SiO_{1.5}, SiO_{1.8}, SiO_{1.9} and the like, which is not limited herein. The silicon oxide can form a stable SEI film in the charging and discharging process, thereby reducing electrolyte decomposition and improving the stability of the secondary battery.

In some embodiments, the silicon-based active material includes silicon particles and a silicon oxide layer on surfaces of the silicon particles. The silicon oxide layer includes silicon oxide, and a general formula of the silicon oxide is SiOₓ, where 0.5≤x<2. Specifically, SiOₓ may be specifically SiO_{0.5}, SiO_{0.7}, SiO_{0.9}, SiO, SiO_{1.2}, SiO_{1.5}, SiO_{1.8}, SiO_{1.9} and the like, which is not limited herein.

In some embodiments, the silicon-based active material further includes silicon particles and a silicon oxide layer on surfaces of the silicon particles, and based on a mass of the silicon-based active material, a mass percentage of oxygen atoms in the silicon-based material is 1% to 18%. Specifically, the mass percentage of oxygen atoms in the silicon-based active material may be 1%, 2%, 3%, 4%, 5%, 6%, 7%, 8%, 9%, 10%, 11%, 12%, 13%, 14%, 15%, 16%, 17%, 18% or any value within a range of any two above values. Controlling the mass percentage of oxygen atoms in the silicon-based active material within the above range can form a stable silicon oxide layer on surfaces of the silicon particles, which can reduce the direct contact between the silicon particles and the electrolyte, thereby reducing the side reaction between the silicon particles and the electrolyte, and improving the cycle stability of the anode material. Moreover, it can maintain the stable activity of the silicon-based active material, and improve the specific capacity of the anode material.

Typically, but not exclusively, morphology of the silicon-based active material includes at least one of dot, sphere, ellipsoid and flake.

In some embodiments, the median particle diameter D50 of the anode material is in a range from 0.5 µm to 25 µm, specifically, D50 may be 0.5 µm, 1 µm, 2 µm, 3 µm, 4 µm, 5 µm, 8 µm, 10 µm, 15 µm, 20 µm, 25 µm or any value within a range of any two above values, which is not particularly limited herein.

When median particle diameter D50 of the anode material is controlled within the above range, firstly, the diffusion path of lithium ions can be reduced, and the charging and discharging efficiency of the battery is improved; secondly, the compaction of the anode material particles is facilitated, a tighter structure is formed, and the energy density of the battery is improved; and thirdly, the processing performance of the electrode plate is improved, and then the comprehensive electrochemical performance of the battery is improved.

In some embodiments, the particle size distribution coefficient of the anode material satisfies: 0.75≤(D90 - D10)/D50≤1.1, specifically, (D90 - D10)/D50 may be 0.75, 0.78, 0.8, 0.85, 0.9, 1, 1.1, or any value within a range of any two above values, which is not particularly limited herein.

The particle size distribution coefficient of the anode material is controlled to satisfy 0.75≤(D90 - D10)/D50≤1.1. This means that the particle size distribution of the anode material is relatively uniform, which can reduce the stress difference in the anode material, thereby reducing the interaction force between the particles, preventing the particles from being crushed and pulverized in the cycle process, and improving the cycle stability of the anode material. In addition, the uniform particle size distribution can make the anode material be contact with the electrolyte more uniform, which can form a thinner and more stable SEI film, reduce the decomposition of the electrolyte, and improve the electrochemical stability of the secondary battery. D10 represents a corresponding particle size when the cumulative particle size distribution percentage of the powder volume reaches 10%, D50 represents a corresponding particle size when the cumulative particle size distribution percentage of the powder volume reaches 50%, and D90 represents a corresponding particle size when the cumulative particle size distribution percentage of the powder volume reaches 90%.

In some embodiments, a specific surface area of the anode material is in a range from 0.1 m²/g to 5 m²/g, specifically, the specific surface area of the anode material may be 0.1 m²/g, 0.2 m²/g, 0.3 m²/g, 0.5 m²/g, 1 m²/g, 2 m²/g, 3 m²/g, 4 m²/g, 5 m²/g or any value within a range of any two above values, which is not particularly limited herein.

When the specific surface area of the anode material satisfies the above limitation, the direct contact area between the anode material and the electrolyte is moderate, the side reactions are few, which improves the safety of the secondary battery. In addition, the number of surface active sites is moderate, which can quickly embed and remove the lithium ions on the surface of the material, and improve the rate performance of the secondary battery.

In some embodiments, the anode material has pores, the pores include mesopores, and a volume percentage of the mesopores is in a range from 25% to 95% based on a total pore volume of the anode material being 100%, specifically, the volume percentage of the mesopores is 25%, 30%, 35%, 40%, 50%, 60%, 70%, 80%, 90%, 95% or any value within a range of any two above values, which is not particularly limited herein.

Mesopores in the anode material provide an effective diffusion path for lithium ions. Compared with micropores or macropores, the size of the mesopores can ensure that lithium ions cannot encounter excessive obstacles in the charging and discharging process, and cannot cause excessive aggregation or uneven distribution of the lithium ions due to excessive large pores. The existence of the mesopores can form elastic space in the anode material, buffer volume expansion generated in the intercalation and deintercalation process of lithium ions, and improve the cycle stability of the anode material. Generally, holes or pores with a pore size ≤2 nm are called micropores, holes or pores with a pore size of 2 nm to 50 nm are called mesopores, and holes or pores larger than 50 nm are called macropores. The total pore volume of the anode material is a sum of the micropore volume, the mesopore volume and the macropore volume.

In some embodiments, in the anode material, a mass fraction of carbon element is in a range from 30% to 60%, specifically, a mass fraction of carbon element may be 30%, 35%, 40%, 45%, 50%, 55%, 60% or any value within a range of any two above values, which is not particularly limited herein.

The mass fraction of the carbon element is controlled within the above range, on one hand, good electronic conductivity can be provided, and the kinetic performance can be improved. On the other hand, the volume change caused by intercalation and deintercalation of lithium ions in the charging and discharging process can be effectively relieved. By controlling the mass fraction of the carbon element in the anode material to be in the range of 30% to 60%, the conductivity, mechanical stability, energy density and cost efficiency of the material can be balanced.

In some embodiments, in the anode material, a mass fraction of silicon element is in a range from 30% to 65%, specifically, a mass fraction of silicon element may be 30%, 35%, 40%, 45%, 50%, 55%, 60%, 65% or any value within a range of any two above values, which is not particularly limited herein.

On one hand, it is beneficial to improve the capacity of the anode material and improve the energy density of the secondary battery. On the other hand, it is beneficial to optimize the capacity attenuation problem and improve the cycle stability. On another hand, the anode material will form an SEI film in the first charging and discharging process, and when the mass fraction of silicon element is within the above range, it can promote the formation of a more stable and thinner SEI film, which is beneficial to improve the first Coulombic efficiency and cycle performance.

In some embodiments, in the anode material, a mass fraction of oxygen element is ≤5%, specifically, the mass fraction of the oxygen element may be 5%, 4.5%, 4%, 3.5%, 3%, 2.5%, 2%, 1.5%, 1%, 0.5%, or any value within a range of any two above values, which is not particularly limited herein.

Controlling the mass fraction of oxygen element within the above range helps the anode material to form a thinner SEI film in the first charge and discharge process, reduces the oxidation of the surface of the anode material, improves the cycle stability of the anode material, and prolongs the service life of the battery.

In some embodiments, in the anode material, a mass ratio of silicon element to carbon element is (0.8 to 2):1, specifically, the mass ratio of the silicon element to the carbon element is 0.8:1, 1:1, 1.2:1, 1.4:1, 1.6:1, 1.8:1, 2:1, or any value within a range of any two above values, which is not particularly limited herein.

In the anode material composed of the silicon material and carbon material, the silicon element can improve the specific capacity, the carbon matrix can provide a conductive network, which promotes the rapid transmission of electrons. The mass ratio of silicon element to carbon element is controlled to be within the above range, the content of carbon is sufficient to form an effective electron transmission path, thereby improving the overall conductivity of the anode material, improving the rate performance of the lithium ion battery under a large-current charging and discharging condition, reducing the change rate of the volume of the anode material in the charging and discharging process, improving the mechanical performance of the anode material, and improving the service life of the anode material.

In some embodiments, the anode material includes an inner core and a coating layer located at least partially on a surface of the inner core, in which the inner core includes a carbon matrix and a silicon-based active material loaded on the carbon matrix, and the coating layer includes a carbon material.

By additionally providing the coating layer, an efficient electron transmission path is provided, the conductivity of the anode material is enhanced, the electron flow efficiency in intercalation and deintercalation process of lithium ions can be significantly improved, thereby improving the rate performance of the battery. In addition, the coating layer can absorb and buffer the volume change caused by the silicon-based active material in the charging and discharging process, maintain the structural integrity of the anode material, and reduce the isolation rate of the anode material and the current collector, thereby improving the cycle stability of the battery.

In some embodiments, the carbon material includes at least one of artificial graphite, natural graphite, amorphous carbon, activated carbon, mesocarbon microbeads, carbon nanotubes, carbon nanofibers, porous carbon, and graphene.

The layered carbon material such as artificial graphite, natural graphite and the like can provide structural support for silicon-based active materials, relieve the volume change in the charging and discharging process, and reduce the pulverization of the active materials. When the amorphous carbon is intercalated with lithium, the volume change is small, which can maintain the stability of the electrode structure, and prolongs the cycle life of the battery. The high specific surface area of the activated carbon and the porous carbon can provide more active sites, so that the contact between the silicon and the electrolyte is improved, and a stable and thin SEI film is formed, thereby improving the first Coulombic efficiency and cycle stability. The mesocarbon microbeads can absorb volume expansion, maintain the integrity of the electrode structure, thereby improving the cycle stability of the battery. The carbon nanotubes and the carbon nanofibers have excellent mechanical properties, which can enhance the mechanical strength of the anode material, and improve the durability of the secondary battery. The graphene has good thermal stability and good conductivity, which can improve the safety and electrochemical performance of the secondary battery.

In some embodiments, a thickness of the coating layer is in a range from 5nm to 300 nm, specifically, the thickness of the coating layer may be any value within a range of 5nm, 10 nm, 15 nm, 20 nm, 25 nm, 30 nm, 35 nm, 40 nm, 50 nm, 70 nm, 100 nm, 200 nm, 300 nm, or any two above values, which is not particularly limited herein. And/or, a mass fraction of the coating layer is ≤10%, specifically, the mass fraction of the coating layer is any value within a range of 10%, 9%, 8%, 7%, 6%, 5%, 4%, 3%, 2%, 1%, or any two above values, which is not particularly limited herein.

The thickness of the coating layer or the mass fraction of the coating layer is controlled within the above range, on one hand, sufficient elastic space is provided, the volume expansion of the silicon-based active material can be absorbed, and the stability of the electrode structure prepared from the anode material is improved. On the other hand, a continuous conductive network can be formed on the surface of the silicon-based active material, electron transmission is promoted, and the conductivity and rate performance of the battery are improved. In addition, the silicon-based active material can fully play the performance of the silicon-based active material, and the utilization rate of the silicon-based active material is improved, so that the total capacity and energy density of the secondary battery are improved.

In another embodiment of the present disclosure, a method for preparing an anode material is provided. The method includes following steps.

S1, a carbon matrix was placed in a reactor, and a gas containing the first silicon source was introduced to conduct a first deposition for T0 hours in which the volume fraction of the first silicon source is V0%, to obtain a first product.

S2, the first product was placed in the reactor, and a gas containing the first carbon source and the second silicon source was introduced to conduct a second deposition, in which a volume ratio of the first carbon source to the second silicon source was (1-50):1, a volume percentage of the first carbon source was controlled to be V1%, and a second deposition was carried out for T1 hours to obtain a second product.

S3, the second product was placed in the reactor, and a gas containing the second carbon source was introduced to conduct a third deposition, in which a volume percentage of the second carbon source was controlled to be V2% and a deposition time was set to be T2 hours to obtain an anode material.

When the flow rate of the gas containing the first carbon source and the second silicon source in S2 is equal to the flow rate of the gas containing the second carbon source in S3, V2 > V1, and T1 > T2.

Controlling V2 > V1, and T1 > T2 can smoothly and fully fill the first carbon source into the first product, so that the second carbon source forms a uniform and dense coating layer on the surface of the second product, and the coating layer has a certain thickness. If T1 is less than T2, the coating thickness is too large, and the capacity is reduced, and the above control is performed on the deposition time to form a coating layer with a proper thickness, so that the anode material has a proper specific capacity, and the interface stability of the anode material is improved. The method can prepare following anode material. The anode material includes a carbon matrix and a silicon-based active material loaded on the carbon matrix; the average atomic percentage of carbon element in a range from a surface (0 nm) of the anode material to a depth of 20 nm is C₀₋₂₀, and the average atomic percentage of carbon element in a range from a depth of 160 nm to 200 nm of the anode material is C₁₆₀₋₂₀₀, a ratio of C₁₆₀₋₂₀₀ to C₀₋₂₀ satisfies: 0.8≤C₁₆₀₋₂₀₀/C₀₋₂₀<1. The anode material has good capacity and electrochemical stability.

Specifically, but not exclusively, a volume percentage of the first carbon source to the second silicon source is 1:1, 2:1, 5:1, 10:1, 15:1, 20:1, 25:1, 30:1, 40:1, 50:1, or any value within a range of any two above values, which is not particularly limited herein.

In some embodiments, a temperature of the first deposition is in a range from 500°C to 600°C, specifically, the temperature of the first deposition may be 500°C, 520°C, 540°C, 560°C, 580°C, 600°C, or any value within a range of any two above values, which is not particularly limited herein.

In some embodiments, a duration of the first deposition is in a range from 3h to 13h, specifically, the duration of the first deposition is 3h, 4h, 5h, 6h, 7h, 8h, 9h, 10h, 11h, 12h, 13h, or any value within a range of any two above values.

In some embodiments, a volume fraction of the first silicon source is in a range from 5% to 55%, specifically, a volume fraction of the first silicon source is 5%, 10%, 15%, 20%, 25%, 30%, 35%, 40%, 45%, 50%, 55% or any value within a range of any two above values, which is not particularly limited herein.

In some embodiments, a temperature of the second deposition is in a range from 540°C to 650°C, specifically, the temperature of the second deposition is 540°C, 560°C, 580°C, 600°C, 620°C, 650°C, or any value within a range of any two above values, which is not particularly limited herein.

In some embodiments, a duration of the second deposition is in a range from 2.5h to 6h, specifically, the duration of the second deposition may be 2.5h, 3h, 4h, 5h, 6h or any value within a range of any two above values, which is not particularly limited herein.

In some embodiments, a volume fraction of the first carbon source is in a range from 6% to 25%, specifically, the volume fraction of the first carbon source may be 6%, 8%, 10%, 15%, 20%, 25% or any value within a range of any two above values, which is not particularly limited herein.

In some embodiments, a volume fraction of the second silicon source is in a range from 2.5% to 15%, specifically, the volume fraction of the second silicon source is 2.5%, 3%, 5%, 8%, 10%, 12%, 15% or any value within a range of any two above values, which is not particularly limited herein.

In some embodiments, a temperature of the third deposition is in a range from 500°C to 550°C, specifically, the temperature of the third deposition may be 500°C, 510°C, 520°C, 530°C, 540°C, 550°C, or any value within a range of any two above values, which is not particularly limited herein.

In some embodiments, a duration of the third deposition is in a range from 1h to 2h, specifically, the duration of the third deposition may be 1h, 1.2h, 1.5h, 1.8h, 2h or any value within a range of any two above values, which is not particularly limited herein.

In some embodiments, a volume fraction of the second carbon source is in a range from 16% to 52%, specifically, the volume fraction of the second carbon source may be 16%, 20%, 25%, 30%, 35%, 40%, 45%, 50%, 52% or any value within a range of any two above values, which is not particularly limited herein.

It can be understood that all gas sources in the present disclosure are diluted with a carrier gas, and the carrier gas may be one or more of nitrogen, argon, and helium. Preferably, the carrier gas is nitrogen.

By further regulating and controlling the conditions of the first deposition, the second deposition and the third deposition, the anode material can meet the requirements that C₀₋₂₀ is in a range from 90% to 98%, C₁₆₀₋₂₀₀ is in a range from 79% to 89%, Si₀₋₂₀ is in a range from 0.4% to 2%, and Si₁₆₀₋₂₀₀ is in a range from 10% to 15%, which can ensure that the anode material has good structural stability and high capacity.

In some embodiments, 1.2≤V2/V1≤2.1, and a ratio of V1 to the volume percentage of second silicon source is (1 to 6):1. Specifically, the ratio V2/V1 may be 1.2, 1.3, 1.4, 1.5, 1.6, 1.7, 1.8, 1.9, 2.0, 2.1, or any value within a range of any two above values, which is not particularly limited herein. A ratio of V1 to the volume percentage of the second silicon source may be 1:1, 2:1, 3:1, 4:1, 5:1, 6:1, or any value within a range of any two above values, which is not particularly limited herein.

By further regulating and controlling the conditions of the second deposition and the third deposition, the prepared anode material can satisfy Si_{160 -200}/Si₀₋₂₀≥6.9, which can further improve the cycle stability of the anode material.

Typically, but not exclusively, the silicon-containing gas source includes silane, and the carbon-containing gas source includes at least one of propylene, acetylene, cyclohexane and the like.

The present disclosure is further described in detail with reference to specific examples, and these examples cannot be understood to limit the scope claimed in the present disclosure.

### Example 1

In Example 1 of an anode material of the present disclosure, a preparation method of an anode material in the example includes as follows.

S1, carbon matrix (porous carbon) was placed in a reaction chamber, silane and a carrier gas (nitrogen) were introduced into the reaction chamber, a volume fraction of silane was controlled to be 15%, that is, a volume ratio of silane to nitrogen was 15:85, a total gas flow rate was 50 L/min, a temperature was raised to 520°C, and the reaction was conducted for 10h to obtain a first product.

S2, after the first product was cooled to room temperature, propylene, silane and a carrier gas (nitrogen) were introduced into the reaction chamber, a volume ratio of propylene, silane to the carrier gas was controlled to be 15:15:70, a total gas flow rate was 50 L/min, and a temperature was raised to 620°C and maintained for 4h to obtain a second product.

S3, propylene and a carrier gas (nitrogen) were introduced into the reaction chamber, a volume fraction of propylene in the reaction chamber was controlled to be 25%, a total gas flow rate was 50 L/min, a temperature was raised to 550°C and maintained for 2h to form a carbon coating layer, and then sieved with a 325-mesh screen to obtain an anode material.

### Example 2

In Example 2 of an anode material of the present disclosure, a preparation method of the anode material in the example includes as follows.

S1, carbon matrix (porous carbon) was placed in a reaction chamber, silane and a carrier gas (nitrogen) were introduced into the reaction chamber, a volume fraction of silane was controlled to be 35%, a total gas flow rate was 50 L/min, a temperature was raised to 580°C, and the reaction was conducted for 9h to obtain a first product.

S2, after the first product was cooled to room temperature, acetylene, silane and a carrier gas (nitrogen) were introduced into the reaction chamber, a volume ratio of acetylene, silane to the carrier gas was controlled to be 25:5:70, a total gas flow rate was 50 L/min, and a temperature was raised to 600°C and maintained for 6h to obtain a second product.

S3, acetylene and a carrier gas (nitrogen) were introduced into the reaction chamber, a volume fraction of acetylene in the reaction chamber was controlled to be 30%, a total gas flow rate was 50 L/min, a temperature was raised to 550°C and maintained for 1.5h to form a carbon coating layer, and then sieved with a 325-mesh screen to obtain an anode material.

### Example 3

In Example 3 of an anode material of the present disclosure, a preparation method of the anode material in the example includes as follows.

S1, carbon matrix (porous carbon) was placed in a reaction chamber, silane and a carrier gas (argon) were introduced into the reaction chamber, a volume fraction of silane was controlled to be 10%, a total gas flow rate was 50 L/min, a temperature was raised to 600°C, and the reaction was conducted for 13h to obtain a first product.

S2, after the first product was cooled to room temperature, acetylene, silane and a carrier gas (argon) were introduced into the reaction chamber, a volume ratio of acetylene, silane to the carrier gas was controlled to be 20:8:72, a total gas flow rate was 50 L/min, and a temperature was raised to 650°C and maintained for 2.5h to obtain a second product.

S3, acetylene and a carrier gas (argon) were introduced into the reaction chamber, a volume fraction of acetylene in the reaction chamber was controlled to be 36%, a total gas flow rate was 50 L/min, a temperature was raised to 500°C and maintained for 2h to form a carbon coating layer, and then sieved with a 325-mesh screen to obtain an anode material.

### Example 4

In Example 4 of the anode material of the present disclosure, a preparation method of the anode material in the example includes as follows.

S1, carbon matrix (porous carbon) was placed in a reaction chamber, silane and a carrier gas (helium) were introduced into the reaction chamber, a volume fraction of silane was controlled to be 55%, a total gas flow rate was 50 L/min, a temperature was raised to 500°C, and the reaction was conducted for 3h to obtain a first product.

S2, after the first product was cooled to room temperature, cyclohexane, silane and a carrier gas (helium) were introduced into the reaction chamber, a volume ratio of cyclohexane, silane to the carrier gas was controlled to be 20:10:70, a total gas flow rate was 50 L/min, and a temperature was raised to 540°C and maintained for 4h to obtain a second product.

S3, cyclohexane and a carrier gas (helium) were introduced into the reaction chamber, a volume fraction of cyclohexane in the reaction chamber was controlled to be 40%, a total gas flow rate was 50 L/min, a temperature was raised to 500°C and maintained for 1h to form a carbon coating layer, and then sieved with a 325-mesh screen to obtain an anode material.

### Example 5

In Example 5 of the anode material of the present disclosure, a preparation method of the anode material in the example includes as follows.
S1, same as Example 1;
S2, after the first product was cooled to room temperature, propylene, silane and a carrier gas (nitrogen) were introduced into the reaction chamber, a volume ratio of the propylene is controlled to 15%, that is, a volume ratio of propylene, silane to nitrogen was controlled to be 15:2.5:82.5, a total gas flow rate was 50 L/min, and a temperature was raised to 620°C and maintained for 4h to obtain a second product.
S3, propylene and a carrier gas (nitrogen) were introduced into the reaction chamber, a volume fraction of propylene in the reaction chamber was controlled to be 18%, a total gas flow rate was 50 L/min, a temperature was raised to 550°C and maintained for 2h to form a carbon coating layer, and then sieved with a 325-mesh screen to obtain an anode material.

### Example 6

In Example 6 of the anode material of the present disclosure, a preparation method of the anode material in the example includes as follows.
S1, same as Example 1;
S2, after the first product was cooled to room temperature, propylene, silane and a carrier gas (nitrogen) were introduced into the reaction chamber, a volume ratio of propylene, silane to the carrier gas was controlled to be 15:6.5:78.5, a total gas flow rate was 50 L/min, and a temperature was raised to 620°C and maintained for 4h to obtain a second product.
S3, propylene and a carrier gas (nitrogen) were introduced into the reaction chamber, a volume fraction of propylene in the reaction chamber was controlled to be 18%, a total gas flow rate was 50 L/min, a temperature was raised to 550°C and maintained for 2h to form a carbon coating layer, and then sieved with a 325-mesh screen to obtain an anode material.

### Example 7

In Example 7 of the anode material of the present disclosure, a preparation method of the anode material in the example includes as follows.
S1, same as Example 1;
S2, after the first product was cooled to room temperature, propylene, silane and a carrier gas (nitrogen) were introduced into the reaction chamber, a volume ratio of propylene, silane to nitrogen was controlled to be 25:5:70, a total gas flow rate was 50 L/min, and a temperature was raised to 620°C and maintained for 4.2h to obtain a second product.
S3, propylene and a carrier gas (nitrogen) were introduced into the reaction chamber, a volume fraction of propylene in the reaction chamber was controlled to be 52%, a total gas flow rate was 50 L/min, a temperature was raised to 550°C and maintained for 2h to form a carbon coating layer, and then sieved with a 325-mesh screen to obtain an anode material.

### Example 8

In Example 8 of the anode material of the present disclosure, a preparation method of the anode material in the example includes as follows.
S1, same as Example 1;
S2, after the first product was cooled to room temperature, propylene, silane and a carrier gas (nitrogen) were introduced into the reaction chamber, a volume fraction of propylene, silane to nitrogen was controlled to be 15:3:82, a total gas flow rate was 50 L/min, and a temperature was raised to 600°C and maintained for 4.5h to obtain a second product.
S3, propylene and a carrier gas (nitrogen) were introduced into the reaction chamber, a volume fraction of propylene in the reaction chamber was controlled to be 16%, a total gas flow rate was 50 L/min, a temperature was raised to 550°C and maintained for 2h to form a carbon coating layer, and then sieved with a 325-mesh screen to obtain an anode material.

### Comparative Example 1

Comparative Example 1 differs from Example 1 in that:step S2 is omitted.

### Comparative Example 2

Comparative Example 2 differs from Example 1 in that:in S2, a volume ratio of propylene, silane to nitrogen is 30:5:65; and in S3, a volume fraction of propylene is 15%.

### Comparative Example 3

Comparative Example 3 differs from Example 1 in that:in S2, a volume ratio of propylene, silane and nitrogen is 15:15:70, and a heat preservation duration is 1h.

**Table 1 Settings of Experimental Conditions**

| Experim ental Conditio ns | Volum e Percen tage of First Silicon Source /% | First Depositio n Temperatu re/°C | First Deposi tion Time (T0) /h | Volum e Percen tage of First Carbon Source (V1)/ % | Second Deposi tion Time (T1)/h | Second Depositio n Temperatu re/°C | Volum e Percen tage of Second Carbon Source (V2)/ % | Third Deposi tion Time (T2)/h | Third Depositio n Temperatu re/°C |
|---|---|---|---|---|---|---|---|---|---|
| Example 1 | 15 | 520 | 10 | 15 | 4 | 620 | 25 | 2 | *550* |
| Example 2 | 35 | 580 | 9 | 25 | 6 | 600 | 30 | 1.5 | *550* |
| Example 3 | 10 | 600 | 13 | 20 | 2.5 | 650 | 36 | 2 | 500 |
| Example 4 | 55 | 500 | 3 | 20 | 4 | 540 | 40 | 1 | 500 |
| Example 5 | 15 | 520 | 10 | 15 | 4 | 620 | 18 | 2 | *550* |
| Example 6 | 15 | 520 | 10 | 15 | 4 | 620 | 18 | 2 | *550* |
| Example 7 | 15 | 520 | 10 | 25 | 4.2 | 620 | 52 | 2 | *550* |
| Example 8 | 15 | 520 | 10 | 15 | 4.5 | 600 | 16 | 2 | *550* |
| Compar ative Example 1 | 15 | 520 | 10 | / | / | / | 25 | 2 | *550* |
| Compar ative Example 2 | 15 | 520 | 10 | 25 | 4 | 620 | 15 | 2 | *550* |
| Compar ative Example 3 | 15 | 520 | 10 | 15 | 1 | 620 | 25 | 2 | *550* |

### Performance Test

1. C₀₋₂₀, C₁₆₀₋₂₀₀, Si₀₋₂₀, Si₁₆₀₋₂₀₀: an X-ray photoelectron spectroscopy test was carried out on an anode material by adopting a Thermo Scientific K-Alpha device (USA). A whole test process was carried out in a glove box filled with argon. Ta₂O₅ is used as a sputtering standard sample for calibrating a sputtering rate and a depth scale. A thermally oxidation Ta₂O₅ film with a uniform thickness of 300 nm is prepared on a single-crystal Ta substrate. The Ta₂O₅ film is sputtered off, and the intensity variation of the Ta₂O₅ characteristic peak and the elemental Ta characteristic peak in the Ta4f spectrum is monitored to determine a duration required for complete removal of the Ta₂O₅. Using the known thickness of Ta₂O₅, the sputtering rate is calculated as: sputtering rate = thickness / sputtering time. The sputtered depth is then determined based on the sputtering rate. Fine spectrum of three elements C, O and Si need to be tested at each time of spectrum collection, a sputtering depth of argon ions was set to be 20 nm at each time, a test mode was spectrum collection and 20 nm etching, and was repeated for a certain number of times. The above test was repeated in any twenty different regions of the anode material, and finally, the average atomic percentage of the two elements C and Si in the anode material in the depth range of 0nm to 20 nm and the depth range of 160 nm to 200 nm (in each depth range, a total atomic percentage content of the three elements C, Si and O is 100%) is obtained through statistics.
2. Mass fraction of silicon element in the anode material: a sample was burned in an oxygen atmosphere using a box-type atmosphere furnace (Brand: Nanyang Xinyu, Model: SA2-9-17TP), silicon and silicon monoxide in the sample were converted into silicon dioxide, carbon was burned into carbon dioxide and discharged, and a mass fraction of silicon element was calculated by weighing.

### 3. Mass fraction of carbon element in the anode material

The German Bruker/German Elst infrared carbon sulfur analyzer G4 ICARUS HF/CS-i was used, a sample was burned in a high-temperature oxygen-rich state, and carbon element contained in the sample were oxidized to carbon dioxide which entered the infrared detector with a carrier gas. A content of carbon element was calculated by quantitatively analyzing a variation in intensity of the infrared absorption wavelength corresponding to the carbon dioxide signal.

### 4. Mass fraction of oxygen element in the anode material

A mass fraction of oxygen element in the anode material was tested by using an Oxygen, Nitrogen and Hydrogen Analyzer.

### 5. Median particle size D50 and particle size distribution coefficient (D90 - D10)/D50 of anode material

Referring to GB/T 19077 -2016, a volume-based cumulative particle size distribution of particles was measured by adopting a laser diffraction method, D10 represents a particle size corresponding to a powder volume cumulative particle size distribution percentage reaching 10%, D50 represents a particle size corresponding to a powder volume cumulative particle size distribution percentage reaching 50%, D90 represents a particle size corresponding to the powder volume cumulative particle size distribution percentage reaching 90%, and a particle size distribution coefficient can be calculated. During testing, firstly, 1 mL of a surfactant aqueous solution diluted at a mass ratio of 1:50 is provided. The above surfactant aqueous solution is added to a beaker containing an appropriate amount of an anode material sample (0.3-1 g) while stirring. Then, pure water is added and mixed evenly before testing. A ratio of sample to water should be adjusted so that a shade degree during measurement falls between 8% and 15%.

### 6. Thickness of a carbon coating layer in anode material

An anode material was fixed onto a specimen stage with conductive adhesive. A flat section was prepared using an argon-ion milling system (ion beam energy: 5 keV, milling angle: 10°, milling time: 2 hours). The section was observed with a scanning electron microscope (SEM) under an accelerating voltage of 10 kV and a working distance of 8 mm using a back-scattered electron detector. Five clear images from different locations were selected, and 15 measurement points were uniformly marked on each image. An average of all measured points was taken as the thickness of the coating layer.

### 7. Specific surface area and mesopore ratio of the anode material

A Physical and Chemical Union iPore620 pore size tester and a BET pore size distribution testing method were used, an isothermal adsorption characteristic curve of nitrogen gas was used to obtain pore size distribution data of the anode materials through DFT simulation analysis, and then BET specific surface area and mesopore ratio of the materials were obtained.

### 8. Average particle size of silicon-based active material

The silicon-based active material in the anode was observed by transmission electron microscopy (TEM). The detailed procedures are as follows.

**Sample Preparation:** A small amount of the anode material was added to anhydrous ethanol and subjected to ultrasonic dispersion (power: 250 W, time: 5 min) until the particles were uniformly dispersed. One to two drops of dispersion liquid were dropped onto a copper grid and dried naturally or dried under vacuum (40-60 °C, 10-15 min), ensuring that the anode material particles showed no obvious agglomeration or overlap.

**Microscopy Observation and Parameter Setting:** The TEM was operated at an accelerating voltage of 100-200 kV. The magnification was adjusted until the boundaries of individual nano-silicon particles could be clearly resolved (typically 100,000-500,000 times).

**Particle Selection and Measurement:** In clear TEM images, 20 silicon-based active-material particles that showed no overlap, no damage, or complete contours were randomly selected. Using the built-in scale bar of the microscope or image-analysis software (such as ImageJ), a longest-axis diameter of each particle was measured. An average of particle sizes of the measured particles was taken as an average particle size of the silicon-based active material.

### 9. Electrochemical Performance Test

The respective anode material in the Examples and Comparative Examples, sodium carboxymethyl cellulose, styrene-butadiene rubber, conductive graphite (KS-6) and carbon black (SP) in a mass ratio of 92:2:2:2:2 were prepared into a slurry. The slurry was uniformly coated on a copper foil and dried to obtain an anode plate. A button battery is assembled in an argon atmosphere glove box, a used separator is a polypropylene microporous membrane, an used electrolyte is a solution with a concentration of lithium hexafluorophosphate being 1mol/L, in which a solvent is a mixed slurry of ethylene carbonate, ethyl methyl carbonate and dimethyl carbonate, a volume ratio of the ethylene carbonate to the ethyl methyl carbonate and the dimethyl carbonate is 1:1:1, and a used counter electrode is a metal lithium plate. A test was carried out by LAND CT2001A battery test system, and the test temperature is 25 °C.

(1) First Coulombic Efficiency:a test was performed under a condition that the charge-discharge current was 0.05C, and an average value of three button batteries prepared from the respective anode material was recorded in Table 1. (2) First Discharge Specific Capacity and capacity retention rate after 100 cycles (%):1) standed for 6 hours; 2) discharged to 0.01V at a constant current of 0.1C, and discharged at a constant voltage until the current was 0.05C; 3) standed for 30 minutes; 4) charged at a constant current of 0.1C to 1.5V; 5) standed for 30 minutes; 6) discharged to 0.01V at a constant current of 0.1C, and discharged at a constant voltage until the current is 0.05C; 7) standed for 180 minutes at 25 °C; 8) charged to 1.5V at a constant current of 1C; 9) standed for 60 minutes; 10) discharged to 0.01V at a constant current of 1C, and discharged at a constant voltage until the current is 0.05C; 11) standed for 30 minutes; and 12) repeated 8) to 11) for 100 times, and the test is stopped. The capacity retention rate after 100 cycles = discharge specific capacity after 100 cycles/first discharge specific capacity, and an average value of three button batteries prepared from each anode material is recorded in Table 2.

**Table 2**

| Items | Exam ple 1 | Exam ple 2 | Exam ple 3 | Exam ple 4 | Exam ple 5 | Exam ple 6 | Exam ple 7 | Exam ple 8 | Com parati ve Exam ple 1 | Com parati ve Exam ple 2 | Com parati ve Exam ple 3 |
|---|---|---|---|---|---|---|---|---|---|---|---|
| C₀₋₂₀ (at%) | 95 | 92 | 96 | 95 | 90 | 93 | 98 | 97 | 96 | 89 | 95 |
| C₁₆₀₋₂₀₀ (at%) | 84 | 82 | 80 | 79 | 85 | 84 | 89 | 83 | 71 | 91 | 75 |
| C₁₆₀₋₂₀₀/C₀₋₂₀ | 0.88 | 0.89 | 0.83 | 0.83 | 0.94 | 0.9 | 0.91 | 0.86 | 0.74 | 1.02 | 0.79 |
| Si₀₋₂₀ (at%) | 1.9 | 1.2 | 1.5 | 2 | 1.1 | 1.3 | 0.4 | 1.6 | 0.2 | 1.4 | 1.8 |
| Si₁₆₀₋₂₀₀ (at%) | 13.4 | 15 | 14.4 | 13.8 | 14.2 | 15 | 10 | 10.72 | 22 | 6.7 | 20 |
| Si₁₆₀₋₂₀₀/Si₀₋₂₀ | 7.05 | 12.5 | 9.6 | 6.9 | 12.9 | 15 | 25 | 6.7 | 110 | 4.8 | 11.11 |
| Si (wt%) | 50.1 | 49.8 | 50.4 | 50.9 | 48.7 | 49 | 49.5 | 50.2 | 48.9 | 49.9 | 49.1 |
| C (wt%) | 49.4 | 49.4 | 48.5 | 48.2 | 49.4 | 50.5 | 48.5 | 47.5 | 49.3 | 48.7 | 48.9 |
| O (wt%) | 0.5 | 0.8 | 1.1 | 0.9 | 1.9 | 0.5 | 2 | 2.3 | 1.8 | 1.4 | 2 |
| Specific Surface Area (m²/g) | 1.2 | 0.6 | 1.8 | 2 | 2.4 | 2.8 | 1.5 | 1.3 | 5 | 5.8 | 2.5 |
| Thickness of Carbon Coating Layer (nm) | 45 | 42 | 57 | 56 | 38 | 39 | 90 | 31 | 42 | 30 | 45 |
| D50 Particle Size (µm) | 8.5 | 8.9 | 9.1 | 9 | 8 | 7.2 | 10.1 | 8.8 | 8.6 | 8.1 | 8.2 |
| Average Particle Size of Silicon-Based Active Material (nm) | 2.1 | 2 | 3.3 | 1.94 | 1.99 | 1.98 | 2 | 2 | 2.1 | 2.2 | 2.1 |
| The Volume percentage of Mesopores (%) | 56 | 45 | 55 | 37 | 67 | 45 | 44 | 36 | 67 | 56 | 61 |
| Particle Size Distribution Coefficient | 1.03 | 0.9 | 0.89 | 1.1 | 1.21 | 0.92 | 0.78 | 1.18 | 1.05 | 1.09 | 1.02 |
| First Discharge Specific Capacity (mAh/g) | 1906 | 1883 | 1910 | 1925 | 1845 | 1879 | 1906 | 1809 | 1892 | 1908 | 1877 |
| First Coulombic Efficiency (%) | 92.5 | 92.8 | 92.9 | 92.7 | 92.8 | 92.6 | 92.9 | 91.4 | 90.5 | 92.7 | 92.5 |
| Capacity Retention Rate after 100 Cycles (%) | 91.9 | 92.1 | 91.6 | 91.9 | 91.3 | 90.4 | 90.6 | 89.4 | 84.7 | 87.5 | 86.7 |

It can be seen from Table 1 that the batteries prepared from the anode materials in the Examples and the Comparative Examples both have higher specific capacity, but the cycling performance of the batteries prepared from the anode materials in the Comparative Examples is relatively poor, and the capacity retention rate after 100 cycles of the batteries is lower than 88%, while the capacity retention rate after 100 cycles of the batteries prepared from the anode materials in the Examples of the present disclosure can all reach 89% or more, have good capacity and cycling stability, and have a wide application range.

The values of C₁₆₀₋₂₀₀/C₀₋₂₀ in Comparative Example 1 and Comparative Example 3 are too small, resulting in a low capacity retention rate after 100 cycles of the secondary batteries made of the anode material in Comparative Example 1 and Comparative Example 3. The values of C₁₆₀₋₂₀₀/C₀₋₂₀ in Comparative Example 2 are too large, which can result in poor cycle performance of the secondary batteries made of the anode material.

In addition, the performance test results of Examples 1 to 8 show that when Si₁₆₀₋₂₀₀/Si₀₋₂₀≥6.9, the 100 cycle capacity retention rates of the batteries prepared from the anode material are all higher than 90%; further, when 6.9≤Si₁₆₀₋₂₀₀/Si₀₋₂₀≤12.9, the cycle performance of the anode material is better, and after the anode material is applied to the battery, the capacity retention rates after 100 cycles are higher than 91%.

The above is only preferred embodiments of the present disclosure, and is not intended to limit the present disclosure, and the present disclosure may be modified and changed by those skilled in the art. All the modifications, equivalent substitutions and improvements made within the spirit and principles of the present disclosure shall fall into the protection scope of the present disclosure.

## Claims

1. An anode material, comprising a carbon matrix and a silicon-based active material loaded on the carbon matrix,
wherein an average atomic percentage of carbon element in a range from a surface of the anode material to a depth of 20 nm is C₀₋₂₀, and an average atomic percentage of carbon element in a range from a depth of 160 nm to 200 nm of the anode material is C₁₆₀₋₂₀₀, a ratio of C₁₆₀₋₂₀₀ to C₀₋₂₀ satisfies: 0.8≤C₁₆₀₋₂₀₀/C₀₋₂₀<1.

2. The anode material according to claim 1, wherein the C₁₆₀₋₂₀₀/C₀₋₂₀ is 0.8, 0.85, 0.9, 0.95, 0.99 or any value within a range of any two of above values.

3. The anode material according to claim 1 or 2, comprising at least one of following features:
(1) C₀₋₂₀ is in a range from 90% to 98%;
(2) C₀₋₂₀ is C₀₋₂₀ is 90%, 91%, 92%, 93%, 94%, 95%, 96%, 97%, 98%, or any value within a range of any two above values.

4. The anode material according to any one of claims 1 to 3, comprising at least one of following features:
(1) C₁₆₀₋₂₀₀ is in a range from 79% to 89%; or
(2) C₁₆₀₋₂₀₀ is 79%, 80%, 81%, 82%, 83%, 84%, 85%, 86%, 87%, 88%, 89% or any value within a range of any two above values.

5. The anode material according to any one of the preceding claims, wherein an average atomic percentage of silicon element in a range from a surface of the anode material to a depth of 20 nm is Si₀₋₂₀, and an average atomic percentage of silicon element in a range from a depth of 160 nm to 200 nm of the anode material is Si₁₆₀₋₂₀₀, a ratio of Si₁₆₀₋₂₀₀ to Si₀₋₂₀ satisfies: Si₁₆₀₋₂₀₀/Si₀₋₂₀≥6.9.

6. The anode material according to any one of the preceding claims, comprising at least one of following features:
(1) Si₀₋₂₀ is in a range from 0.4% to 2%;
(2) Si₀₋₂₀ is 0.4%, 0.5%, 0.8%, 1%, 1.2%, 1.5%, 1.8%, 2% or any value within a range of any two above values.

7. The anode material according to any one of the preceding claims, comprising at least one of following features:
(1) Si₁₆₀₋₂₀₀ is in a range from 10% to 15%; or
(2) Si_{160 -200} is 10%, 11%, 12%, 13%, 14%, 15% or any value within a range of any two above values.

8. The anode material according to any one of claims 1 to 7, comprising at least one of the following features:
(1) the carbon matrix comprises at least one of artificial graphite, natural graphite, amorphous carbon, activated carbon, mesocarbon microbeads, carbon nanotubes, carbon nanofibers, porous carbon, and graphene;
(2) the silicon-based active material comprises at least one of crystalline silicon, amorphous silicon, a composite of crystalline silicon and amorphous silicon, a silicon alloy, and a silicon oxide;
(3) morphology of the silicon-based active material comprises at least one of a form of dot, sphere, ellipsoid and flake; or
(4) the carbon matrix has pores, and at least part of the silicon-based active material is located in pores of the carbon matrix.

9. The anode material according to any one of claims 1 to 8, comprising at least one of the following features:
(1) a particle size distribution coefficient of the anode material satisfies:0.75≤(D90 - D10)/D50≤1.1;
(2) the anode material has a D50 particle size ranging from 0.5 µm to 25 µm.

10. The anode material according to any one of claims 1 to 9, wherein the anode material has a specific surface area ranging from 0.1 m²/g to 5 m²/g.

11. The anode material according to any one of claims 1 to 10, wherein the anode material has pores comprising mesopores, and a volume percentage of the mesopores is in a range from 25% to 95% based on a total pore volume of the anode material being 100%.

12. The anode material according to any one of the preceding claims, comprising at least one of following features:
(1) in the anode material, a mass fraction of carbon element is in a range from 30% to 60%;
(2) in the anode material, a mass fraction of silicon element is in range from 30% to 65%;
(3) in the anode material, a mass fraction of oxygen element is ≤5%; or
(4) in the anode material, a mass ratio of silicon element to carbon element is (0.8 to 2):1.

13. The anode material according to claim 1, wherein the anode material comprises an inner core and a coating layer located on at least a portion of a surface of the inner core, the inner core comprises the carbon matrix and the silicon-based active material loaded on the carbon matrix, and the coating layer comprises a carbon material.

14. The anode material according to claim 13, comprising at least one of following features:
(1) the carbon material comprises at least one of artificial graphite, natural graphite, amorphous carbon, activated carbon, mesocarbon microbeads, carbon nanotubes, carbon nanofibers, porous carbon, and graphene;
(2) the coating layer has a thickness in a range from 5nm to 300 nm; or
(3) a mass fraction of the coating layer is ≤10% based on a mass fraction of the anode material being 100%.

15. A secondary battery, comprising an anode material according to any one of claims 1 to 14.
